# EUROPÄISCHE PATENTSCHRIFT

(11) **EP 2 117 874 B1**
(45) Veröffentlichungstag und Bekanntmachung des Hinweises auf die Patenterteilung: **22.09.2010**
(21) Anmeldenummer: 09717333.0
(22) Anmeldetag: 05.03.2009
(51) Int. Cl.: B60P 1/04, B60P 3/00

(54) **VORRICHTUNG ZUM BEFÖRDERN VON PLATTEN- ODER TAFELFÖRMIGEN GEGENSTÄNDEN**
DEVICE FOR TRANSPORTING PANEL OR BOARD-SHAPED OBJECTS
DISPOSITIF DESTINE AU TRANSPORT D'OBJETS EN FORME DE PANNEAUX OU DE PLAQUES

(30) Priorität: 06.03.2008 AT 3732008; 13.05.2008 AT 7632008
(43) Veröffentlichungstag der Anmeldung: 18.11.2009
(73) Patentinhaber: Eckelt Glas GmbH, 4400 Steyr (AT)
(72) Erfinder: FORSTNER, Helmut, A-3363 Ulmerfeld (AT)
(74) Vertreter: Beer, Manfred
(86) Internationale Anmeldenummer: PCT/AT2009/000090
(87) Internationale Veröffentlichungsnummer: WO 2009/108982

(56) Entgegenhaltungen:
- EP-A- 0 503 615
- EP-A- 1 459 932
- WO-A-2007/033816
- DE-A1- 19 644 749
- DE-U1- 20 304 208

## Beschreibung

Die Erfindung betrifft eine Vorrichtung zum Befördern von platten- oder tafelförmigen Gegenständen, insbesondere Flachglas, mit den Merkmalen des einleitenden Teils des unabhängigen Anspruchs 1 (DE 203 04 208 U).

Eine Vorrichtung der eingangs genannten Gattung ist aus DE 203 04 208 U bekannt. Bei dieser bekannten Vorrichtung soll die schwenkbare Klappe (in der DE 203 04 208 U der Bügel 15) freigegeben werden, wenn der kritische Winkel nicht erreicht wird. Hiezu lehrt die DE 203 04 208 U bloß, dass ein Magnetschalter vorgesehen sein kann. Nähere Angaben, wie das Sperren und das Freigeben der Klappe erfolgen soll und welche Konstruktion hiezu vorgesehen sein kann, sind in der DE 203 04 208 U nicht geoffenbart.

Plattenförmige Gegenstände, wie z.B. Flachglas, werden nach heutigem Stand der Technik mit Spezialfahrzeugaufbauten (sogenannte: Reffs) transportiert. Diese Vorrichtungen (Reffs) erlauben es, Platten in nahezu vertikaler Position zu laden und zu transportieren. Die Sicherung der Ladung erfolgt durch gesonderte Vorrichtungen, beispielsweise durch vertikale Riegel (Klemmstangen), die in Öffnungen an der Reffober- und -unterkonstruktion eingreifen und dadurch die Platten, z.B. das Flachglas, festspannen. Zum Entladen müssen die Klemmstangen nach oben gedrückt werden bis sie aus der unteren Öffnung freikommen, dann können sie nach vorne geschwenkt und aus der oberen Öffnung herausgezogen werden.

Befindet sich das Fahrzeug im regulären Neigungszustand (im Wesentlichen horizontal), weist der Grundrahmen der Vorrichtung eine Neigung von ca. 6° aus der Vertikalen zum Fahrzeug hin auf. Dies entspricht der Neigung für den üblichen, sicheren Glastransport. In diesem Lagezustand können die Vorrichtungen, die das Ladegut am Grundrahmen sichern, z.B. die Klemmstangen, problemlos entfernt werden, ohne Gefahr zu laufen, dass die Gegenstände, z.B. Glasplatten, durch ihr Eigengewicht nach vorne kippen. Nachdem die Vorrichtung (der Grundrahmen) fest mit dem Fahrzeug verbunden ist, hängt der tatsächliche Ladewinkel von den Geländegegebenheiten und der Lage des Fahrzeuges ab. Es liegt im Ermessen der Bedienungsperson, ob ein gefahrloses Entfernen der Klemmstangen möglich ist oder nicht.

Eine Vorrichtung zum Sichern der Schrägstellung eines Halterungsrahmens an einem Fahrzeug zeigt die EP 1 459 932 A. Bei dieser Vorrichtung sind Abstützungen vorgesehen, die sich am Boden abstützen und ausgefahren werden sollen, bis der Rahmen eine Lage einnimmt, bei welcher das Laden und Entladen ohne Gefahr möglich ist.

Aus der EP 0 503 615 A ist ein an einem Fahrzeug angebrachtes Transportgestell bekannt, das um eine oberhalb des Fahrzeuges liegende Achse verschwenkbar ist. Mit Hilfe einer Schwenkvorrichtung wird das Transportgestell unten vom Fahrzeug weggedrückt und somit verschwenkt bis es eine Schrägstellung einnimmt, bei der bessere Transport- und Lagerbedingungen gegeben sind. Bei dieser Vorrichtung ist es möglich, den Neigungswinkel des Grundrahmens der Vorrichtung durch eine mechanische Vorrichtung zu verstellen. Es obliegt jedoch der Bedienungsperson, welcher Winkel jeweils eingestellt wird. Daher ist ein gefahrloses Entfernen der Klemmstangen vom persönlichen Einschätzungsvermögen der Bedienungsperson abhängig. Dieser Umstand führt bei Fehleinschätzungen zu Gefahr für Leib und Leben und zur Beschädigung des Ladegutes.

Der Erfindung liegt die Aufgabe zu Grunde, eine Vorrichtung der eingangs geschilderten Gattung dahingehend zu verbessern, dass die eingangs geschilderte Gefahr nicht besteht.

Gelöst wird diese Aufgabe erfindungsgemäß mit einer Vorrichtung, welche die Merkmale von Anspruch 1 aufweist.

Bevorzugte und vorteilhafte Ausgestaltungen der Erfindung sind Gegenstand der Unteransprüche.

Bei der erfindungsgemäßen Vorrichtung können die Einrichtungen, welche verhindern, dass die Vorrichtungen, die Klemmstangen, welche die Gegenstände am Grundrahmen sichern (also die Gegenstände in ihrer am Grundrahmen lehnenden Position festhalten) nur gelöst werden, wenn der Neigungssensor feststellt, dass der kritische Ladewinkel nicht unterschritten wird. Unter dem kritischen Ladewinkel wird der Winkel des Grundrahmens zur Lotrechten verstanden, der so groß ist, dass keine Gefahr besteht, dass am Grundrahmen lehnende Gegenstände nach dem Öffnen bzw. Entfernen der Vorrichtungen, der Klemmstangen, welche die Gegenstände am Grundrahmen sichern, von selbst vom Grundrahmen abkippen und herunterfallen. Es ist bei der erfindungsgemäßen Vorrichtung also sichergestellt, dass die in der Vorrichtung transportierten und am Grundrahmen lehnenden Gegenstände auch nach dem Entfernen der Vorrichtungen, welche die Gegenstände (plattenförmige Gegenstände, wie Glastafeln und Ähnliches) am Grundrahmen festhalten, nicht ungewollt herunterfallen.

Da bei der erfindungsgemäßen Vorrichtung im Bereich der oberen Konstruktion der Vorrichtung eine beispielsweise nach oben verschwenkbare Klappe vorgesehen ist, die nur verschwenkt werden kann, wenn der Ladewinkel einen vorgeschriebenen Wert nicht unterschreitet, besteht keine Gefahr, dass Klemmstangen entfernt werden, wenn Gefahr besteht, dass das an der Vorrichtung gehaltene Ladegut, z.B. Glastafel, unter seinem Eigengewicht herauskippt.

Insbesondere ist im Rahmen der Erfindung in einer Ausführungsform vorgesehen, dass ein Sensor vorgesehen ist, welcher die Neigung der Vorrichtung erfasst und die Klappe nur freigibt, wenn der Neigungswinkel so groß ist, dass ein unbeabsichtigtes Herausfallen von plattenförmigen Gegenständen, z.B. Flachglas, aus der Vorrichtung nicht zu erwarten ist.

Bei der Erfindung ist vorgesehen, dass die Klappe nach oben schwenkbar ist und in ihrer Wirkstellung, in der sie das Herausnehmen der Klemmstangen verhindert, durch wenigstens eine vom Neigungssensor gesteuerte Arretiervorrichtung gehalten wird. Beispielsweise ist die Klappe mit wenigstens einer Strebe verbunden, wobei die Strebe bevorzugt am freien, der Schwenkachse der Klappe gegenüberliegenden Rand derselben befestigt ist und wobei die Strebe in der Arretiervorrichtung, die beispielsweise ein Spannschloss ist, festgelegt ist.

Sobald der Neigungssensor einen Winkel feststellt, der kleiner ist als der oben erwähnte Ladewinkel von 6° zur Lotrechten, wird das Spannschloss bzw. die Arretiervorrichtung, welche das Verschwenken der Klappe nach oben sperrt, nicht freigegeben.

Im Rahmen der Erfindung ist auch in Betracht gezogen, die Arretiervorrichtung mit der Elektrik des Fahrzeuges, an dem die Vorrichtung angebracht ist, zu verknüpfen, sodass bei offener Arretiervorrichtung, also nicht gesicherter Klappe, das Starten des Fahrzeuges nicht möglich ist.

Weitere Einzelheiten und Merkmale der Erfindung ergeben sich aus der nachstehenden Beschreibung einer bevorzugten Ausführungsform an Hand der Zeichnung.

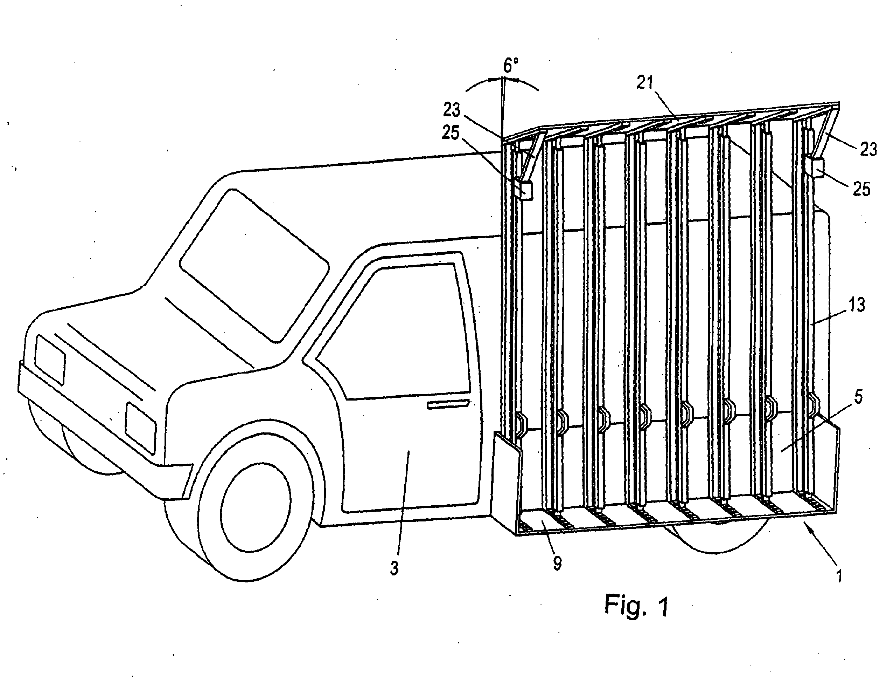

Es zeigt: Fig. 1 eine erfindungsgemäße Vorrichtung in Schrägansicht, Fig. 2 den unteren Bereich der Vorrichtung, Fig. 3 den oberen Bereich der Vorrichtung, Fig. 4 eine Arretiervorrichtung und Fig. 5 eine andere Ausführungsform der Arretiervorrichtung.

Eine Vorrichtung 1 ("Reff") zum Transportieren von tafel- oder plattenförmigen Gegenständen, insbesondere Glastafeln, besitzt einen an einem Fahrzeug 3 seitlich angebrachten Rahmen 5 aus lotrechten Holmen 7, an dem unten eine Auflagefläche 9 für das Ladegut vorgesehen ist, das auf der unteren Auflagefläche 9 aufstehen kann.

Am oberen Ende sind am Rahmen 5 der Vorrichtung 1 (Ladevorrichtung) nach vorne ragende Leisten 11 vorgesehen.

Um Ladegut zu arretieren, sind Klemmstangen 13 vorgesehen, die an ihrem oberen Ende einen Zapfen 15 aufweisen, der in das passende Loch 17 in der nach vorne weisenden Leiste 11 der Oberkonstruktion der Vorrichtung 1 eingreift und dann durch Bewegen nach unten in eine entsprechende Ausnehmung 19 in der am unteren Ende der Vorrichtung 1 vorgesehenen Auflagefläche 9 eingesteckt wird.

Der Grundrahmen 5 der Vorrichtung 1 (Reff) ist am Fahrzeug 3 so montiert, dass er bei horizontal stehendem Fahrzeug 3 einen Neigungswinkel von 6° zur Vertikalen aufweist, also zum Fahrzeug 3 hin schräg gestellt ist.

Die Erfindung besitzt eine Zusatzkonstruktion, welche verhindert, dass die Klemmstangen 13 entfernt werden können, wenn die Mindestneigung der Ladevorrichtung 1 den Winkel von 6° zur Lotrechten unterschreitet.

Am oberen Rand des Rahmens 5 ist eine schwenkbare (mechanische) Klappe 21 angebracht, die seitlich mit wenigstens einer Strebe 23 (aus Flachstahl) in wenigstens einer Arretiervorrichtung 25 fixiert wird. Die Klappe 21 verhindert bei in der Arretiervorrichtung 25 arretierten Streben 23, wenn also die Klappe 21 auf den Leisten 11 von oben her anliegt, ein Hochheben der Klemmstangen 13.

In der wenigstens einen Arretiervorrichtung 25 befindet sich ein (elektrischer) Neigungssensor 41, der die Lage der Vorrichtung 1 erfasst. Wird der gefahrlose Ladewinkel von 6° unterschritten (die Last hängt nach vorne), ist die Arretiervorrichtung 25 verriegelt, so dass die Streben 23 aus der Arretiervorrichtung nicht entfernt werden können. Bei Neigungswinkeln > als 6° werden die Streben 23 zur manuellen Entriegelung von der Arretiervorrichtung 25 frei gegeben und die Klappe 21 kann nach oben geöffnet (geschwenkt) werden. Erst dann ist es möglich, die Klemmstangen 13 so weit nach oben zu bewegen, dass sie unten aus den Öffnungen 19 gezogen und dann ausgehängt werden können.

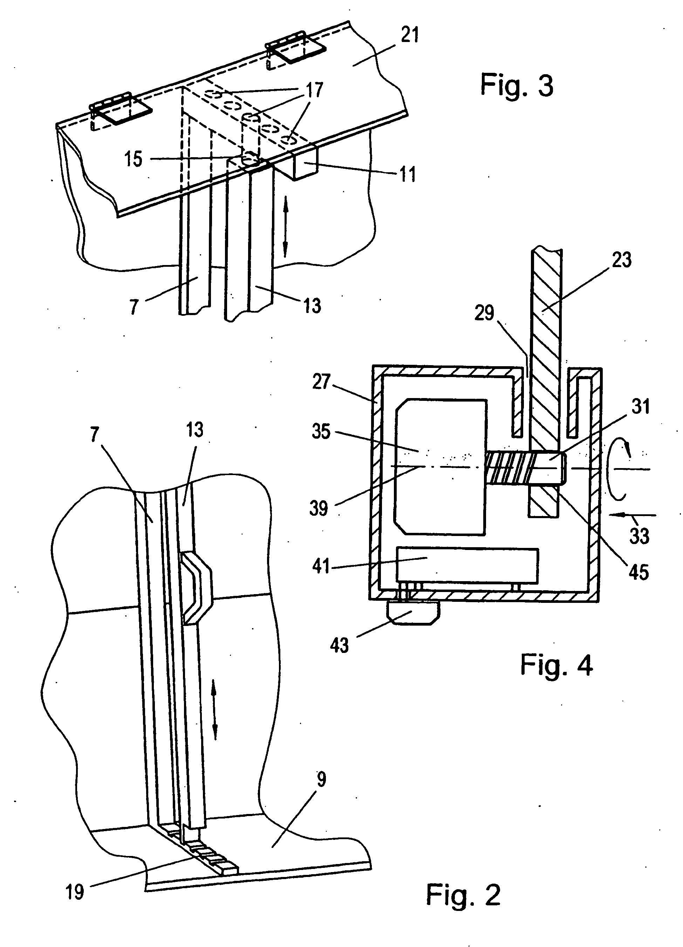

In der in Fig. 4 gezeigten beispielhaften Ausführungsform besitzt eine Arretiervorrichtung 25, in der die Streben 23, die z.B. aus Flachstahl bestehen, wahlweise fixiert und wahlweise freigegeben sind, folgenden Aufbau:

In einem Gehäuse 27, in dem oben eine Einführöffnung 29 für die Streben 23 vorgesehen ist, ist ein verstellbarer Sicherungsbolzen 31 vorgesehen. Der Sicherungsbolzen 31 kann in einer Richtung (Pfeil 33) quer zur Längserstreckung der Strebe 23 verstellt werden. Hiezu ist beispielsweise ein Elektromotor 35 vorgesehen, der nach Art eines Spindel-Spindelmutter-Antriebs den Sicherungsbolzen 31 in seiner Längsrichtung (Achse 39) verstellen kann.

Hiezu ist der Elektromotor 35 steuerungsmäßig mit dem in der Arretiervorrichtung 25 vorgesehenen Neigungssensor 41 verbunden, d.h. dass der Motor 35 den Sicherungsbolzen 31 lediglich dann in seine Freigabestellung bewegt, wenn der Neigungssensor 41 anzeigt, dass der gefahrlose Ladewinkel von 6° nicht unterschritten ist.

Zusätzlich ist in der in Fig. 4 gezeigten Ausführungsform der Arretiervorrichtung 25 ein Schalter vorgesehen, der über einen außerhalb der Arretiervorrichtung 25 vorgesehenen Taster 43 betätigt werden kann. Mit diesem Schalter kann nach Betätigen des Tasters 43 der Sicherungsbolzen 31 auf jeden Fall aus einer in Fig. 4 gezeigten Sperr- bzw. Wirkstellung, in der er in ein Loch 45 in der Strebe 23 eingreift, in seine Freigabestellung bewegt werden, sodass die Strebe 23 unabhängig von dem durch den Neigungssensor 41 erfassten Winkel (Ladewinkel) freigegeben werden kann, indem der Sicherungsbolzen 31 aus dem am freien Ende der Strebe 23 vorgesehenen Loch 45 herausgezogen wird, sodass die Strebe 23 aus der Öffnung 29 des Gehäuses 27 der Arretiervorrichtung 25 herausgezogen werden kann, indem die Klappe 21 nach oben verschwenkt wird.

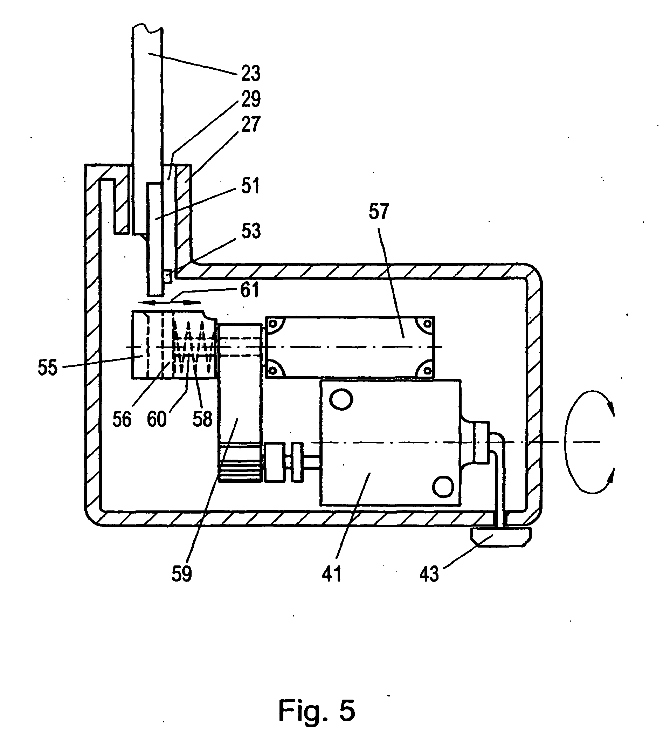

Die in Fig. 5 gezeigte Ausführungsform einer Arretiervorrichtung 25 für Streben 23 besitzt ein Gehäuse 27, das am Grundrahmen 5, insbesondere an einem lotrechten Holm 7 desselben befestigt ist. In dem Gehäuse 27 ist der elektronische Neigungssensor 41, dem der weiter oben beschriebene Taster 23 zugeordnet ist, befestigt. An dem freien Ende der Strebe 23, das durch die Öffnung 29 in das Gehäuse 27 eingeführt werden kann, ist ein Arretierbolzen 51 mit seitlichem Vorsprung (Zapfen) 53 angebracht.

Der Arretierbolzen 51 greift in eine Bolzenaufnahme 55 ein und wird, wenn der Neigungssensor 41 anspricht, also der Neigungswinkel so ist, dass der gefahrlose Ladewinkel unterschritten ist, in der Bolzenaufnahme 55 arretiert. Dabei wird der Arretierbolzen 51 so weit in die Bolzenaufnahme 55 gesteckt, dass der seitliche Vorsprung 53 von einer in der Bolzenaufnahme 55 verschiebbar aufgenommenen Halteplatte 56 hintergriffen ist. Die Halteplatte 56 wird von einem Stössel 60 getragen und von einer Feder 58 in ihre "vorgeschobene" Stellung, in der die Halteplatte 56 den Arretierbolzen 51 in der Bolzenaufnahme 55 arretiert, gerückt. Zum Freigeben des Arretierbolzens 51 durch Zurückziehen der Halteplatte 56 wird die Spule 59 (z.B. über den Schaltkörper 57) mit Strom beaufschlagt, so dass der Stössel 60 und die Halteplatte 56 zurückgezogen werden. Hiezu ist der Bolzenaufnahme 55 der elektrische Schaltkörper 57 zugeordnet, der über die elektrische Spule 59 vom Neigungssensor 41 gesteuert wird. Die Halteplatte 56 bewirkt also, dass der Arretierbolzen 51 in der Bolzenaufnahme 55 verriegelt ist, wenn der gefahrlose Ladewinkel unterschritten ist. Erst wenn der gefahrlose (kritische) Ladewinkel (Neigung der Ladevorrichtung 1 kleiner als 6° zur Lotrechten) vorliegt oder überschritten ist, gibt der Neigungssensor 41 den Arretierbolzen 51 frei und die Strebe 23 kann aus der Arretiervorrichtung 25 herausgezogen werden. Die Funktion des über den Taster 43 betätigbaren Schalters ist so wie oben im Zusammenhang mit Fig. 4 beschrieben.

Das freie, mit dem Vorsprung 53 versehene Ende des Arretierbolzens 51 kann auch spitz oder abgeschrägt ausgebildet sein, so dass der Arretierbolzen 51 bzw. dessen Vorsprung 53 die Halteplatte 56 gegen die Kraft der Feder 58 verschiebt, wenn eine Strebe 23 in die Arretiervorrichtung 25 (Fig. 5) eingeschoben wird.

Die Verkabelung der Arretiervorrichtungen (elektrischen Spannschlösser) 25 der Fig. 4 oder 5 erfolgt bevorzugt in den Holmen 7 des Grundrahmens 5 der Vorrichtung 1, die Stromversorgung durch das Fahrzeug 3.

In einer weiteren Ausführungsform ist die Sicherheitseinrichtung (Arretiervorrichtung 25) mit der elektrischen Anlage des Fahrzeuges 1 derart verknüpft, dass das Fahrzeug 3 bei offener Arretiervorrichtung 25 nicht gestartet werden kann.

Die erfindungsgemäße Vorrichtung ist daher auch eine vorteilhafte Ergänzung zu beweglich aufgebauten Vorrichtung (Ladereff).

Zusammenfassend kann ein Ausführungsbeispiel der Erfindung wie folgt beschrieben werden:
An Vorrichtungen 1 zum Transportieren von platten- oder tafelförmigen Gegenständen mit am Rahmen 5 der Vorrichtung 1 festlegbaren Klemmstangen 13, die in ihrer Wirklage in Ausnehmungen 17, 19 am oberen und am unteren Ende des Rahmens 5 eingreifen, ist am oberen Rand des Grundrahmens 5 eine verschwenkbare Klappe 21 vorgesehen. Die verschwenkbare Klappe 21 verhindert in ihrer Wirklage das Entfernen der Klemmstangen 13 durch Hochheben. Die Klappe 21 ist über Streben 23 mit Arretiervorrichtungen 25 gekuppelt. Die Arretiervorrichtungen 25 sind wirkmäßig mit einem Neigungssensor verbunden, der die Arretiervorrichtungen 25 nur freigibt, wenn der vorgegebene Ladewinkel von insbesondere 6° zur Lotrechten nicht unterschritten ist. So kann die Klappe 21 nur geöffnet und die Kleminstangen 13 entfernt werden, wenn der vorgegebene Ladewinkel, der ein Herausfallen der platten- oder tafelförmigen Gegenstände von der Vorrichtung 1 verhindert, nicht unterschritten ist.

## Patentansprüche

1. Vorrichtung (1) zum Transportieren von platten- oder tafelförmigen Gegenständen, mit einem Grundrahmen (5), der an einem Fahrzeug (3) montiert ist, mit Vorrichtungen zum Sichern der Gegenstände am Grundrahmen (5), worin den Vorrichtungen zum Sichern Sperreinrichtungen zugeordnet sind, mit am unteren Rand und am oberen Rand des Grundrahmens (5) vorgesehenen Aufnahmeöffnungen (19, 17), in welche die Klemmstangen (13) einsteckbar sind, wobei den Klemmstangen (13) als Sperreinrichtung eine verschwenkbare Klappe (21), die im Bereich des oberen Randes des Grundrahmens (5) vorgesehen ist, zugeordnet ist, und mit einem Neigungssensor, der die Sperreinrichtung freigibt, wenn der Grundrahmen (5) zur Lotrechten einen Winkel einnimmt, der einen vorgegebenen Wert übersteigt, wobei die Klappe (21) den Klemmstangen (13) derart zugeordnet ist, dass die Klemmstangen (13) nicht abgenommen werden können, wenn sich die Klappe (21) in ihrer Wirkstellung befindet, **dadurch gekennzeichnet, dass** die Klappe (21), die in ihrer Wirkstellung vom Grundrahmen (5) im Wesentlichen horizontal nach vorne absteht, in ihrer Wirkstellung durch wenigstens eine, insbesondere aber zwei, Streben (23) gehalten ist, die in wenigstens einer Arretiervorrichtung (25), die am Grundrahmen (5) angeordnet ist, arretiert ist.

2. Vorrichtung nach Anspruch 1, **dadurch gekennzeichnet, dass** die Klappe (21) in ihrer Freigabestellung im Wesentlichen parallel zum Grundrahmen (5) ausgerichtet ist.

3. Vorrichtung nach Anspruch 1 oder 2, **dadurch gekennzeichnet, dass** die Klappe (21) in ihrer Wirkstellung an den oberen Enden (15) der Klemmstangen (13) anliegt.

4. Vorrichtung nach einem der Ansprüche 1 bis 3, **dadurch gekennzeichnet, dass** die Klappe (21) in ihrer Wirkstellung von oben her an Leisten (17) aufliegt, welche die oberen Aufnahmeöffnungen (17) für die Klemmstangen (13), insbesondere für an diesen vorgesehene Zapfen (15), aufweisen.

5. Vorrichtung nach einem der Ansprüche 1 bis 4, **dadurch gekennzeichnet, dass** die Arretiervorrichtung (25) ein Spannschloss ist.

6. Vorrichtung nach einem der Ansprüche 1 bis 5, **dadurch gekennzeichnet, dass** die Arretiervorrichtung (25) an einem lotrechten Holm (7) des Grundrahmens (5) angeordnet ist.

7. Vorrichtung nach Anspruch 1, **dadurch gekennzeichnet, dass** der Neigungssensor (41) der Arretiervorrichtung (25), zugeordnet ist, und die Arretiervorrichtung (25) nur freigibt, wenn der vorgegebene Ladewinkel nicht unterschritten ist.

8. Vorrichtung nach einem der Ansprüche 1 bis 7, **dadurch gekennzeichnet, dass** die Arretiervorrichtung (25) eine elektrische Arretiervorrichtung (25) ist, und dass die Stromversorgung an die Stromquelle des Fahrzeuges (3) angeschlossen ist.

9. Vorrichtung nach einem der Ansprüche 1 bis 8, **dadurch gekennzeichnet, dass** die Arretiervorrichtung (25) für die Streben (23) der verschwenkbaren Klappen (21) an einem seitlichen, lotrechten Holm (7) des Grundrahmens (5) befestigt ist.

10. Vorrichtung nach einem der Ansprüche 1 bis 9, **dadurch gekennzeichnet, dass** das Spannschloss (25) einen quer zur Längserstreckung der Strebe (23) verschiebbaren Sicherungsbolzen (31) aufweist, der in der Sicherungsstellung in ein Loch (45) am freien Ende der Strebe (23) eingreift.

11. Vorrichtung nach Anspruch 10, **dadurch gekennzeichnet, dass** der Sicherungsbolzen (31) durch einen Elektromotor (35) in die Sperrstellung und in die Freigabestellung verstellbar ist, und dass der Elektromotor (35) mit dem Niveausensor (41) wirkungsmäßig verbunden ist.

12. Vorrichtung nach Anspruch 11, **dadurch gekennzeichnet, dass** dem Niveausensor (41) ein Freigabeschalter zugeordnet ist, der den Elektromotor (35) unabhängig von dem durch den Neigungssensor (41) erfassten Ladewinkel ansteuert, sodass der Sicherungsbolzen (31) aus der Strebe (23) zurückgezogen wird.

13. Vorrichtung nach einem der Ansprüche 1 bis 9, **dadurch gekennzeichnet, dass** am freien Ende der wenigstens einen Strebe (23) der Klappe (21) ein Arretierbolzen (51) vorgesehen ist, der in einer Bolzenaufnahme (55) der Arretiervorrichtung (25) festlegbar ist.

14. Vorrichtung nach Anspruch 13, durch **gekennzeichnet**, dass der Bolzenaufnahme (55) ein vom Neigungssensor (41) gesteuerter Schaltkörper (57) zugeordnet ist.

15. Vorrichtung nach Anspruch 13 oder 14, **dadurch gekennzeichnet, dass** der Arretierbolzen (51) einen seitlichen Vorsprung, über welchen der Arretierbolzen (51) in der Bolzenaufnahme (55), insbesondere mit Hilfe einer Halteplatte (56), festlegbar ist, aufweist.

16. Vorrichtung nach Anspruch 14 oder 15, durch **gekennzeichnet**, dass der Neigungssensor (41) mit dem der Bolzenaufnahme (55) zugeordneten elektrischen Schaltkörper (57). elektromagnetisch über eine Spule (59) gekuppelt ist.

## Claims

1. A device (1) for transporting plate and board-shaped objects, comprising a base frame (5), which is mounted to a vehicle (3), comprising devices for securing the objects on the base frame (5), wherein locking devices are assigned to the devices for securing, comprising accommodation openings (19, 17), which are provided on the lower edge and on the upper edge of the base frame (5) and into which the clamping bars (13) can be inserted, wherein a pivotable flap (21), which is provided in the area of the upper edge of the base frame (5), is assigned to the clamping bars (13) as locking device and comprising an inclination sensor, which releases the locking device when the base frame (5) assumes an angle to the perpendicular, which exceeds a predetermined value, wherein the flap (21) is assigned to the clamping bars (13) such that the clamping bars (13) cannot be removed when the flap (21) is in its active position, **characterized in that** the flap (21), which in its active position substantially sticks out forward in horizontal direction from the base frame (5), is held in its active position by means of at least one, but in particular by means of two cross-ties (23), which is locked in at least one locking device (25), which is arranged on the base frame (5).

2. The device according to claim 1, **characterized in that** the flap (21) in its release position is oriented so as to be substantially parallel to the base frame (5).

3. The device according to claim 1 or 2, **characterized in that** the flap (21) in its active position abuts on the upper ends (15) of the clamping bars (13).

4. The device according to one of claims 1 to 3, **characterized in that** the flap (21) in its active position abuts on rails (17) from the top, which encompass the upper accommodation openings (17) for the clamping bars (13), in particular for the journals (15), which are provided thereon.

5. The device according to one of claims 1 to 4, **characterized in that** the locking device (25) is a tightener.

6. The device according to one of claims 1 to 5, **characterized in that** the locking device (25) is arranged on a perpendicular arbor (7) of the base frame (5).

7. The device according to claim 1, **characterized in that** the inclination sensor (41) is assigned to the locking device (25) and only releases the locking device (25) when the predetermined loading angle has not been undercut.

8. The device according to one of claims 1 to 7, **characterized in that** the locking device (25) is an electric locking device (25) and **in that** the power supply is connected to the to the power source of the vehicle (3).

9. The device according to one of claims 1 to 8, **characterized in that** the locking device (25) for the cross-ties (23) of the pivotable flaps (21) are secured to a lateral, perpendicular arbor (7) of the base frame (5).

10. The device according to one of claims 1 to 9, **characterized in that** the tightener (25) encompasses a fastening bolt (31), which can be displaced at right angles to the longitudinal extension of the cross-tie (23) and which engages with a hole (45) on the free end of the cross-tie (23) in the securing position.

11. The device according to claim 10, **characterized in that** an electric motor (35) can shift the fastening bolt (31) into the blocking position and into the release position and **in that** the electric motor (35) is operatively connected to the level sensor (41).

12. The device according to claim 11, **characterized in that** a release switch, which controls the electric motor (35) independent on the loading angle, which is determined by the inclination sensor (41), is assigned to the level sensor (41), so that the fastening bolt (31) is pulled back from the cross-tie (23).

13. The device according to one of claims 1 to 9, **characterized in that** provision is made on the free end of the at least one cross-tie (23) of the flap (21) for a locking bolt (51), which can be fixed in a bolt accommodation (55) of the locking device (25).

14. The device according to claim 13, **characterized in that** a switching body (57), which is controlled by the inclination sensor (41), is assigned to the bolt accommodation (55).

15. The device according to claim 13 or 14, **characterized in that** the locking bolt (51) encompasses a lateral projection, via which the locking bolt (51) can be fixed in the bolt accommodation (55), in particular with the help of a fastening plate (56).

16. The device according to claim 14 or 15, **characterized in that** the inclination sensor (41) is electromagnetically coupled to the electric switching body (57), which is assigned to the bolt accommodation (55), via a coil (59).

## Revendications

1. Dispositif (1) pour le transport d'objets en forme de panneaux et de tableaux, avec un cadre de base (5) monté sur un véhicule (3), avec des dispositifs pour la fixation des objets sur le cadre de base (5), où les dispositifs pour la fixation sont attribués à des dispositifs de verrouillage, avec des ouvertures d'admission (19, 17) prévues sur le bord inférieur et le bord supérieur du cadre de base (5), dans lesquelles peuvent être introduites les barres de serrage (13), un clapet pivotant (21) prévu dans la région du bord supérieur du cadre de base (5) étant attribué aux barres de serrage (13) en tant que dispositif de verrouillage, et avec un détecteur d'inclinaison libérant le dispositif de verrouillage lorsque le cadre de base (5) forme, par rapport à la verticale, un angle dépassant une certaine valeur prédéterminée, le clapet (21) étant attribué de telle manière aux barres de serrage (13), que les barres de serrage (13) ne peuvent pas être retirées lorsque le clapet (21) se trouve dans sa position active, **caractérisé en ce que** le clapet (21), qui dans sa position active fait essentiellement saillie horizontalement vers l'avant par rapport au cadre de base (5), est, dans sa position active, maintenu par au moins une, mais en particulier deux bielles (23), qui sont bloquées dans au moins un dispositif de blocage (25)attribué au cadre de base (5).

2. Dispositif selon la revendication 1, **caractérisé en ce que** dans sa position de libération, le clapet (21) est orienté essentiellement parallèlement au cadre de base (5).

3. Dispositif selon la revendication 1 ou 2, **caractérisé en ce que** dans sa position active, le clapet (21) s'applique sur les extrémités supérieures (15) des barres de serrage (13).

4. Dispositif selon l'une des revendications 1 à 3, **caractérisé en ce que** dans sa position active, le clapet (21) repose par le haut sur des baguettes (17) comportant les ouvertures d'admission supérieures (17) pour les barres de serrage (13), en particulier pour les tenons (15) prévus sur celles-ci.

5. Dispositif selon l'une des revendications 1 à 4, **caractérisé en ce que** le dispositif de blocage (25) est un tendeur.

6. Dispositif selon l'une des revendications 1 à 5, **caractérisé en ce que** le dispositif de blocage (25) est disposé sur un longeron vertical (7) du cadre de base (5).

7. Dispositif selon la revendication 1, **caractérisé en ce**
**que** le détecteur d'inclinaison (41) est attribué au dispositif de blocage (25), et le dispositif de blocage (25) ne se relâche que lorsque l'angle de charge prédéfini est atteint.

8. Dispositif selon l'une des revendications 1 à 7, **caractérisé en ce que** le dispositif de blocage (25) est un dispositif de blocage électrique (25), et **en ce que** l'alimentation en courant est raccordée à la source de courant du véhicule (3).

9. Dispositif selon l'une des revendications 1 à 8, **caractérisé en ce que** le dispositif de blocage (25) pour les bielles (23) du clapet pivotant (21) est fixé à un longeron latéral vertical (7) du cadre de base (5).

10. Dispositif selon l'une des revendications 1 à 9, **caractérisé en ce que** le tendeur (25) comporte un ergot d'arrêt (31) qui, dans la position de blocage, s'engage dans un trou (45) à l'extrémité libre de la bielle (23).

11. Dispositif selon la revendication 10, **caractérisé en ce que** l'ergot d'arrêt (31) peut être mis dans la position de verrouillage et dans la position de libération par un moteur électrique (35), et **en ce que** le moteur électrique (35) est opérationnellement relié au détecteur de niveau (41).

12. Dispositif selon la revendication 11, **caractérisé en ce qu'**un interrupteur de libération est attribué au détecteur de niveau (41), permettant de commander le moteur électrique (35) indépendamment de l'angle de charge détecté par le détecteur d'inclinaison (41), de sorte que l'ergot d'arrêt (31) est retiré de la bielle (23).

13. Dispositif selon l'une des revendications 1 à 9, **caractérisé en ce qu'**à l'extrémité libre de l'au moins une bielle (23) du clapet (21), il est prévu un ergot d'arrêt (51) susceptible d'être fixé dans une admission d'ergot (55) du dispositif de blocage (25).

14. Dispositif selon la revendication 13, **caractérisé en ce qu'**un corps de commutation (57) commandé par le détecteur d'inclinaison (41) est attribué à l'admission d'ergot (55).

15. Dispositif selon la revendication 13 ou 14, **caractérisé en ce que** l'ergot d'arrêt (51) comporte une saillie latérale, permettant de fixer l'ergot d'arrêt (51) dans l'admission d'ergot (55), en particulier à l'aide d'une plaque de maintien (56).

16. Dispositif selon la revendication 14 ou 15, **caractérisé en ce que** le détecteur d'inclinaison (41) est accouplé de façon électromagnétique avec le corps de commutation électrique (57) attribué à l'admission d'ergot (55), par le biais d'une bobine (59).
